**Europäisches Patentamt**

**European Patent Office**

**Office européen des brevets**

(19)

(11) Veröffentlichungsnummer : **0 362 506 B1**

(12)   EUROPÄISCHE PATENTSCHRIFT

(45) Veröffentlichungstag der Patentschrift :
03.06.92 Patentblatt 92/23

(51) Int. Cl.⁵ : **B60R 9/055**

(21) Anmeldenummer : **89113959.4**

(22) Anmeldetag : **28.07.89**

(54) **Dachkoffer.**

(30) Priorität : **31.08.88 DE 3829485**

(43) Veröffentlichungstag der Anmeldung :
**11.04.90 Patentblatt 90/15**

(45) Bekanntmachung des Hinweises auf die
Patenterteilung :
**03.06.92 Patentblatt 92/23**

(84) Benannte Vertragsstaaten :
**AT BE CH DE ES FR GB GR IT LI LU NL SE**

(56) Entgegenhaltungen :
**DE-U- 8 531 889
DE-U- 8 625 609
FR-A- 2 521 931
GB-A- 2 194 280
US-A- 2 511 268**

(73) Patentinhaber : **JETBAG GMBH
Dreichlinger Strasse 10
W-8430 Neumarkt (DE)**

(72) Erfinder : **Uebach, Horst
Auf der Lüss 21
W-8431 Sengenthal (DE)**
Erfinder : **Deisenhofer, Siegfried
Pfarrer-Speinle-Strasse 46
W-8801 Herrieden (DE)**

(74) Vertreter : **Patentanwälte Czowalla .
Matschkur + Partner
Dr.-Kurt-Schumacher-Strasse 23 Postfach
9109
W-8500 Nürnberg 11 (DE)**

EP 0 362 506 B1

**Beschreibung**

Die Erfindung bezieht sich auf einen Dachkoffer für Kraftfahrzeuge mit einem schwenkbar am schalenförmigen Unterteil angelenkten, vorzugsweise ebenfalls schalenförmigen Deckel, der in seiner Schließstellung durch mehrere an einer längsverschiebbaren Schließstange angeordnete, in ortsfeste Gegenschließteile eingreifende Schließriegel verriegelbar ist.

Bei den üblichen Dachkoffern der vorstehend beschriebenen Art erfolgt die Anlenkung des Deckels am Unterteil an einer der Längsseiten, die parallel zur Längsachse des Autos auf dem Kraftfahrzeugdach verlaufen. An der gegenüberliegenden Längsseite sind die Riegel angeordnet und demzufolge auch das Schloß zur Riegelbetätigung. Eine derartige Konstruktion ist z.B. aus DE-U-8 531 889 bekannt.

Diese Anordnung hat u.a. den Nachteil, daß ein Be- und Entladen des Dachkoffers nur von einer Seite aus möglich ist.

Der Erfindung liegt daher die Aufgabe zugrunde, einen Dachkoffer so auszugestalten, daß er - bei gleichzeitig großer diebstahlsicherer Verschlußmöglichkeit - bequem von beiden Längsseiten aus in der Öffnungsstellung zugänglich ist.

Zur Lösung dieser Aufgabe ist erfindungsgemäß vorgesehen, daß der Deckel an einer seiner Schmalseiten am Unterteil angelenkt und an beiden Längsseiten durch mehrere beabstandete Riegel mit dem Unterteil verbindbar ist und daß die Schließstangen an den beiden Längsseiten über Umlenkeinrichtungen mit einer gemeinsamen Betätigungsvorrichtung verbunden sind.

Durch die erfindungsgemäße Ausgestaltung ist beim Öffnen des Deckels das Unterteil von beiden Längsseiten und der zweiten Schmalseite her zugänglich, so daß der Dachkoffer sehr viel leichter be- und entladen werden kann. Gleichwohl ergibt sich durch die Mehrfachverriegelung an jeder der Längsseiten ein besonders sicherer Verschluß, der durch die Kopplung der beiden Schließstangen miteinander nach wie vor wie bislang bekannt durch einen Handgriff gelöst und auch wieder verriegelt werden kann.

Obgleich die Betätigungsvorrichtung ja auch in einer der Seitenwände, insbesondere der freien Schmalseite des Unterteils angeordnet sein könnte, wie es bei den bisherigen Dachkoffern üblich ist, hat es sich in Ausgestaltung der Erfindung als besonders zweckmäßig erwiesen, daß die Betätigungsvorrichtung einen im Bereich der der Anlenkseite des Deckels gegenüberliegenden Schmalseite unter dem Boden des Unterteils angeordneten Schwenkgriff umfaßt, dessen den Boden abgedichtet durchsetzende Welle eine beidseits überstehende Hebelplatte trägt, an deren Enden Querstreben angelenkt sind, die jeweils über eine drehbar gelagerte Umlenkplatte mit einer der Schließstangen verbunden sind.

Durch diese Anordnung des Schwenkgriffs unter dem Boden des Dachkoffers kann ein großer leicht betätigbarer Schwenkgriff vorgesehen sein und es muß die Verriegelung nicht, wie bei den bisher bekannten Dachkoffern, mit Hilfe des kleinen Sicherheitsschlüssels erfolgen, dessen Drehbewegung zur Verschiebung der Schließstange führt. Durch die Anordnung auf der Unterseite ist der Handgriff auch leichter zugänglich, als wenn er an der Schmalseite angeordnet würde und schließlich ergibt sich dabei auch noch die vorteilhafte Möglichkeit, den Schwenkgriff in der normalen Nichtgebrauchsstellung quasi unsichtbar wegzuschwenken, indem er entsprechend schwenkbar an der Welle angelenkt ist, so daß er zwischen einer mit der Welle fluchtenden Betriebsstellung und einer gegen den Kofferboden verschwenkten verriegelbaren Nichtbetriebsstellung hin und hergeschwenkt werden kann.

Eine besonders gute Verriegelung ergibt sich in Ausgestaltung der Erfindung dadurch, daß die Riegel in Haken des Deckels eingreifende, auf die Schließstangen aufgenietete Bolzen sind, wobei zur Vermeidung einer Beschädigung der im Dachkoffer untergebrachten Teile sowie zur Verringerung einer Verletzungsgefahr beim Be- und Entladen an den Längsinnenseiten des Unterteils nach oben und zu den Schmalseiten hin offene Abdeckungen zur Aufnahme der Haken des Deckels sowie der Bolzen in der Schließstellung befestigt sein sollen.

Die Erfindung wird in der nachfolgenden Beschreibung eines Ausführungsbeispiels sowie anhand der Zeichnungen näher erläutert. Dabei zeigen:

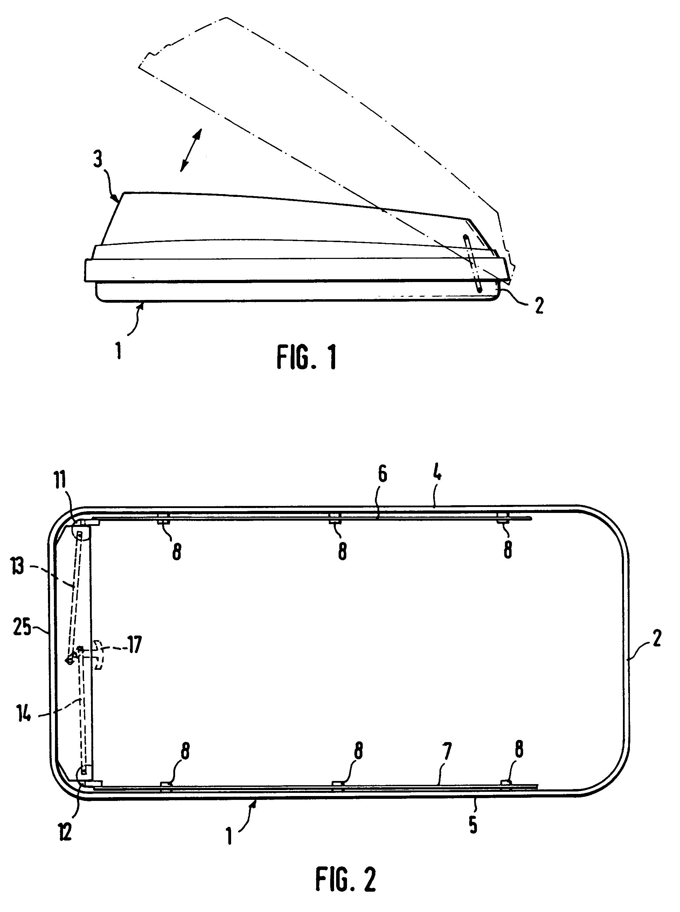

Fig. 1 eine Seitenansicht eines erfindungsgemäßen Dachkoffers,

Fig. 2 eine vergrößerte Aufsicht auf das Unterteil des Dachkoffers,

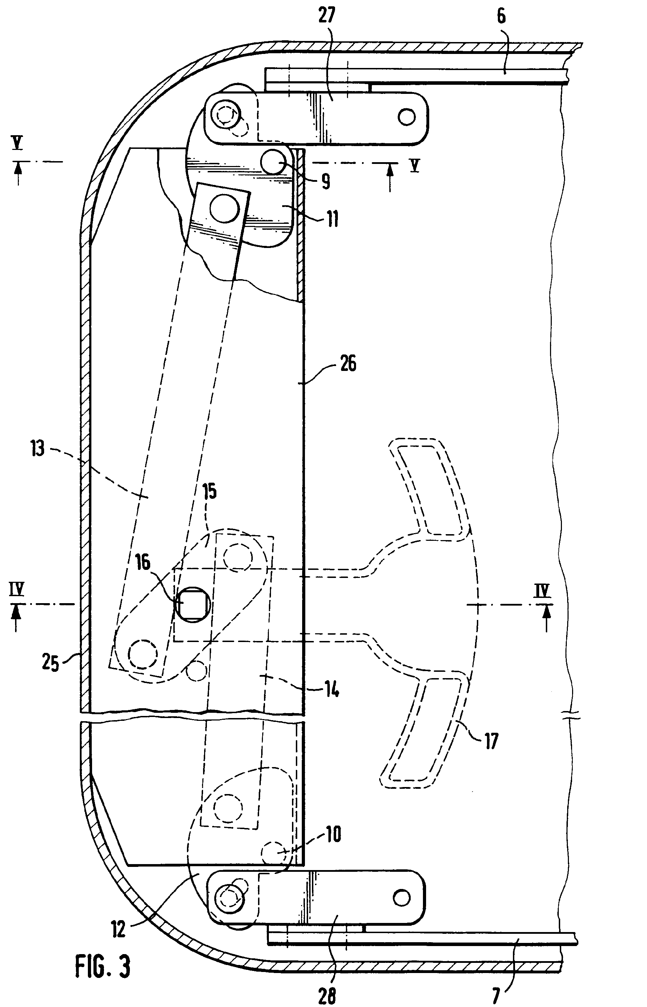

Fig. 3 eine nochmals vergrößerte Aufsicht auf das Unterteil im Bereich der Schließ-Betätigungsvorrichtung,

Fig. 4 einen Schnitt längs der Linie IV-IV in Fig. 3,

Fig. 5 einen Schnitt längs der Linie V-V in Fig. 3,

Fig. 6 einen Teilschnitt parallel zum Kofferboden im Bereich der Schließvorrichtung zur Verdeutlichung der Umlenkverschiebung,

Fig. 7 einen Teilschnitt durch eine der Längsseitenwände des Dachkoffers in der Schließstellung im Bereich eines der vorgesehenen sechs Verschlußriegel,

Fig. 8 eine teilweise aufgeschnittene Innenansicht des Dachkoffers im Bereich eines Verschlußriegels,

Fig. 9 eine Ansicht der Riegelabdeckung, und

Fig. 10 eine Obenansicht der Abdeckung nach Fig. 9.

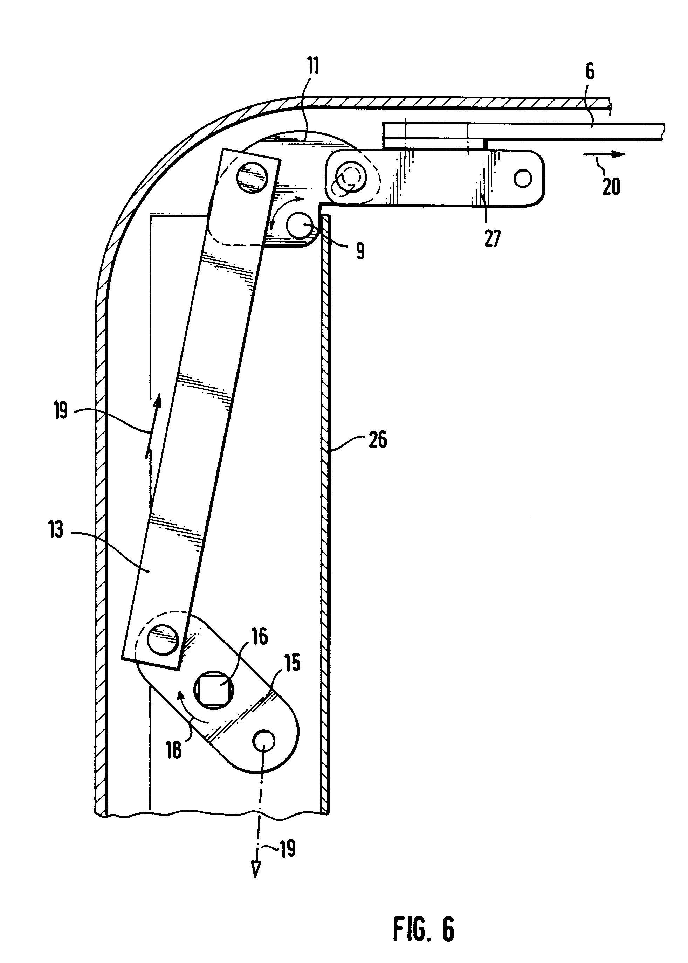

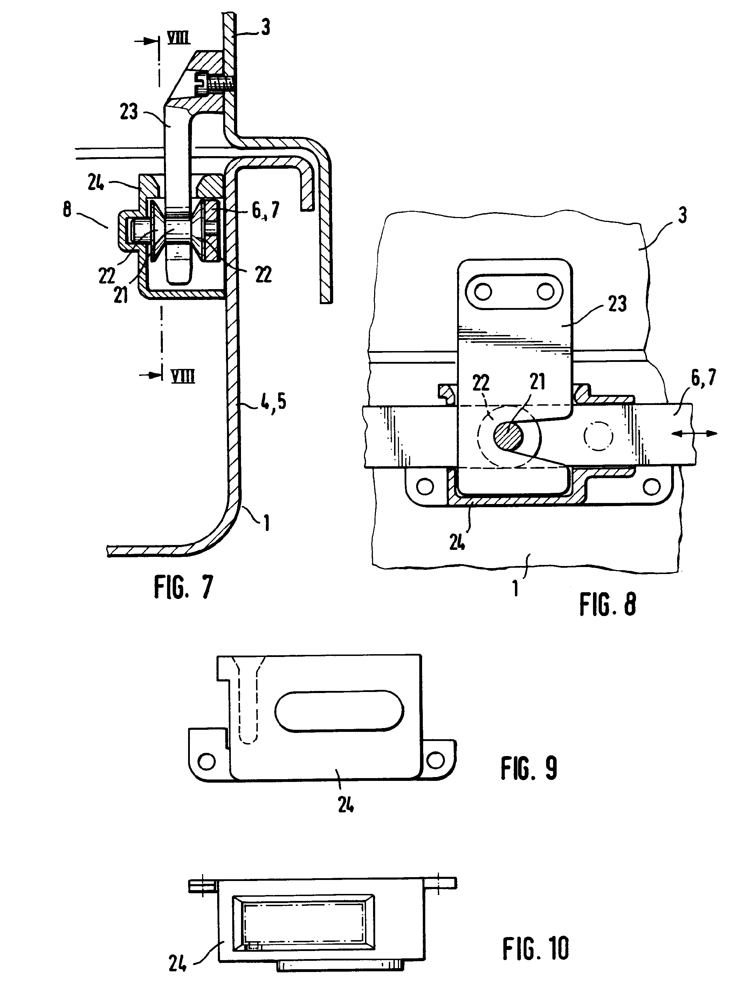

Der gezeigte Dachkoffer besteht aus einem schalenförmigen Unterteil 1 und einem längs der einen Schmalseite 2 daran angelenkten Deckel 3. Der Dachkoffer ist dabei in üblicher Weise mit Hilfe von Trägerbügeln auf einem Kraftfahrzeug befestigbar. Diese Bauteile sind aber hinlänglich bekannt und deshalb der Übersichtlichkeit halber in den Zeichnungen gar nicht mit dargestellt. Durch die Anlenkung an der Schmalseite ist beim Öffnen des Dachkoffers das Unterteil von beiden Längsseiten, d.h. von beiden Seiten des Kraftfahrzeugs aus zugänglich, so daß ein einfacheres rascheres Be- und Entladen möglich ist. Entlang beider Längsseiten 4 und 5 des Unterteils 1 sind Schließstangen 6,7 angeordnet, um an jeweils drei Stellen 8 auf jeder Seite eine Verriegelung zwischen Unterteil und Deckel vorzusehen. Die Schließstangen sind dabei über drehbar um einen Bolzen 9 bzw. 10 gelagerte Umlenkplatten 11 und 12 mit Querstreben 13 bzw. 14 verbunden, die ihrerseits an den Enden einer Hebelplatte 15 angelenkt sind, die drehfest mit einer den Boden des Unterteils abgedichtet durchsetzenden Welle 16 verbunden sind, die über einen ein- und ausschwenkbaren Schwenkgriff 17 betätigbar ist. Durch Verschwenken des in Parallelstellung mit der Welle 16 nach unten geklappten Schwenkgriffs 17 erfolgt eine Verschwenkung der Hebelplatte 15 in Richtung des Pfeils 18 in Fig. 6. Dadurch werden die Querstreben nach außen verschoben (Pfeil 19 in Fig. 6), was über die Umlenkplatte 11 bzw. 12 zu einer entsprechenden gleichsinnigen Längsverschiebung der beiden Schließstangen 6 und 7 führt (Pfeil 20 in Fig. 6). Durch Verschwenken des Handgriffs in der einen Richtung kann somit eine gleichsinnige Verschiebebewegung der Schließstangen 6 und 7 zum Verriegeln und durch Verschwenken in der anderen Richtung eine gleichsinnige Verschiebebewegung zur Entriegelung der Schließriegel erfolgen. Die Riegel sind dabei im gezeigten Ausführungsbeispiel dadurch gebildet, daß auf die Schließstangen 6 bzw. 7 haspelförmige Rollen 21 mit seitlichen Flanschen 22 aufgenietet sind, welche in am Deckel 3 befestigte und nach unten ins Unterteil 1 ragende seitlich offene Haken 23 eingreifen können bzw. auch wieder zur Freigabe entsprechend weit seitlich herausbewegt werden können. Diesen Verschiebeweg erkennt man am einfachsten in Fig. 8. Auf die Innenflächen der Längsseiten 4 und 5 des Unterteils sind dabei Abdeckungen 24 aufgebracht, welche über den Schmalseiten ebenso offen sind wie nach oben. Diese Abdeckungen sollen in der Schließstellung sowohl den Haken 23 als auch die darin eingreifende Rolle 21 aufnehmen.

Ebenso ist auch im Bereich der zweiten Schmalseite 25 eine Abdeckung 26 für die Welle 16 und die Querstreben 13, 14 sowie die Umlenkplatten 11, 12 vorgesehen. Zur Verbindung der als flache Metallbandstangen ausgebildeten Schließstangen 6 und 7, die parallel zu den Längswänden 4 und 5 verlaufen, mit den in einer um 90° versetzten Ebene liegenden flachen Querstreben 13 und 14 dienen Metallwinkel 27 und 28.

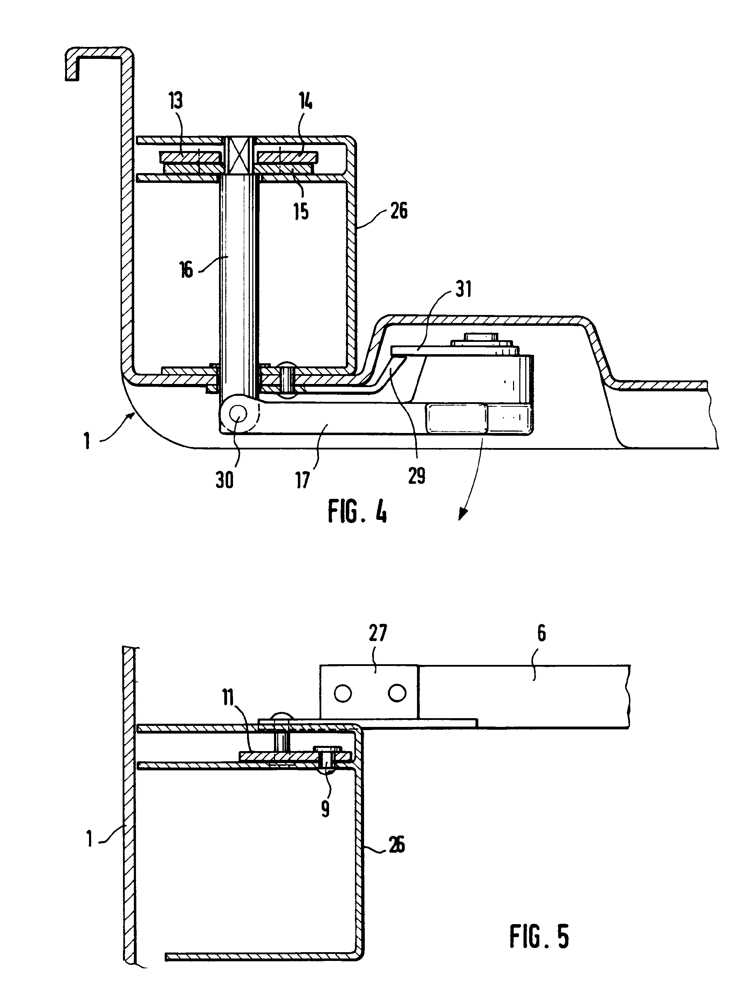

Der Schwenkgriff 17 ist (wie man insbesondere in Fig. 4 erkennen kann) mit einem Sicherheitsschloß versehen, mit Hilfe dessen ein Riegel 31 in die Schließstellung hinter einem Anschlag 29 verdreht werden kann, wenn der Schwenkgriff 17, der um eine Achse 30 an der Welle 16 angelenkt ist, in die eingeschwenkte Nichtbetriebsstellung eingeklappt ist. Damit kann nur nach Betätigung des Sicherheitsschließzylinders der Handgriff nach außen geschwenkt und damit die Welle 16 zur gemeinsamen Öffnung aller Riegel verdreht werden.

**Patentansprüche**

1. Dachkoffer für Kraftfahrzeuge mit einem schwenkbar am schalenförmigen Unterteil angelenkten, vorzugsweise ebenfalls schalenförmigen Deckel, der in seiner Schließstellung durch mehrere an einer längsverschiebbaren Schließstange angeordnete, in ortsfeste Gegenschließteile eingreifende Schließriegel verriegelbar ist, dadurch gekennzeichnet, daß der Deckel (3) an einer seiner Schmalseiten (2) am Unterteil (1) angelenkt und an beiden Längsseiten (4, 5) durch mehrere beabstandete Riegel mit dem Unterteil (1) verbindbar ist und daß die Schließstangen (6, 7) an den beiden Längsseiten (4, 5) über Umlenkeinrichtungen (11, 12, 13, 14, 15, 16) mit einer gemeinsamen Betätigungsvorrichtung verbunden sind.

2. Dachkoffer nach Anspruch 1, dadurch gekennzeichnet, daß die Betätigungsvorrichtung einen im Bereich der der Anlenkseite (2) des Deckels (3) gegenüberliegenden Schmalseite (25) unter dem Boden des Unterteils (1) angeordneten Schwenkgriff (17) umfaßt, dessen den Boden abgedichtet durchsetzende Welle (16) eine beidseits überstehende Hebelplatte (15) trägt, an deren Enden Querstreben (13, 14) angelenkt sind, die jeweils über eine drehbar gelagerte Umlenkplatte (11, 12) mit einer der Schließstangen (6, 7) verbunden sind.

3. Dachkoffer nach Anspruch 1 oder 2, dadurch gekennzeichnet, daß der Schwenkgriff (17) zwischen der mit der Welle (16) fluchtenden Betriebsstellung und einer gegen den Kofferboden verschwenkten verriegelbaren Nichtbetriebsstellung verschwenkbar ist.

4. Dachkoffer nach einem der Ansprüche 1 bis 3, dadurch gekennzeichnet, daß die Riegel in Haken (23) des Deckels (3) eingreifende, auf die Schließstangen (6, 7) aufgenietete Rollen (21) sind.

5. Dachkoffer nach einem der Ansprüche 1 bis 4, dadurch gekennzeichnet, daß an den Längsinnenseiten des Unterteils (1) nach oben und zu den Schmalseiten hin offene Abdeckungen (24) zur Aufnahme der Haken (23) des Deckels sowie der Rollen (21) in der Schließstellung befestigt sind.

## Claims

1. Roof trunk for motor vehicles, with a lid preferably in the form of a shell and pivotably connected to the lower part, which is also in the form of a shell, the lid being lockable in its closed position by a plurality of bolts mounted on a longitudinally displaceable closing bar and engaging in fixed counter-locking parts, characterised in that the lid (3) is pivotably connected to the lower part (1) by one of its narrow sides (2) and is connectable to the lower part (1) on both longitudinal sides (4, 5) by a plurality of spaced bolts, and in that the closing bars (6, 7) at the two longitudinal sides (4, 5) are connected via turning fittings (11, 12, 13, 14, 15, 16) to a common actuating device.

2. Roof trunk according to claim 1, characterised in that the actuating device comprises, mounted below the base of the lower part (1) in the region of the narrow side (25) opposite the pivoting side (2) of the lid (3), a swivel handle (17), whose shaft (16), penetrating the base in a sealed manner, carries a lever plate (15) projecting on both sides, to whose ends cross-struts (13, 14) are pivotably connected, which are connected in each case via a rotatably mounted turning plate (11, 12) to one of the closing bars (6, 7).

3. Roof trunk according to claim 1 or 2, characterised in that the swivel handle (17) is pivotable between the operating position, which is flush with the shaft (16), and a lockable non-operating position, which is pivoted relative to the trunk base.

4. Roof trunk according to one of claims 1 to 3, characterised in that the bolts are rollers (21) riveted on to the closing bars (6, 7) and engaging in hooks (23) on the lid (3).

5. Roof trunk according to one of claims 1 to 4, characterised in that casings (24) for receiving the hooks (23) of the lid and the rollers (21) in the closed position are fixed to the longitudinal inner sides of the lower part (1), and are open at the top and with respect to the narrow sides.

## Revendications

1. Coffre de toit pour véhicules automobiles comportant un couvercle qui est articulé de manière pivotante à la partie inférieure en forme de coque, qui de préférence présente également une forme de coque, et qui dans sa position de fermeture, peut être verrouillé par plusieurs verrous de fermeture agencés à une barre de fermeture susceptible de coulisser longitudinalement, et s'engageant dans des pièces de fermeture conjuguées fixes en position, caractérisé en ce que le couvercle (3) est articulé à la partie inférieure (1) à un de ses petits côtés (2), et peut être relié avec la partie inférieure (1) aux deux côtés longitudinaux (4, 5) par plusieurs verrous espacés entre-eux, et en ce que les barres de fermeture (6, 7) aux deux côtés longitudinaux (4, 5) sont reliées avec un dispositif d'actionnement commun, par l'intermédiaire de dispositifs de basculement (11, 12, 13, 14, 15, 16).

2. Coffre de toit selon la revendication 1, caractérisé en ce que le dispositif d'actionnement comprend une poignée pivotante (17) agencée dans la région du petit côté (25) opposé au côté d'articulation (2) du couvercle (3) et en-dessous du fond de la partie inférieure (1), et en ce que l'arbre (16) de la poignée pivotante traversant de manière étanche le fond de la partie inférieure, porte une plaque de levier (15) en saillie des deux côtés et aux extrémités de laquelle sont articulées des biellettes transversales (13, 14) reliées chaque fois, par l'intermédiaire d'une plaque de basculement (11,12)avec une des barres de fermeture (6, 7).

3. Coffre de toit selon la revendication 1 ou 2, caractérisé en ce que la poignée pivotante (17) peut être pivotée entre la position de service où elle se trouve alignée avec l'arbre (16), et une position hors service verrouillable, dans laquelle elle est basculée contre le fond du coffre.

4. Coffre de toit selon l'une des revendications 1 à 3, caractérisé en ce que les verrous sont des galets (21) s'engageant dans des crochets (23) du couvercle (3) et rivetés sur les barres de fermeture (6, 7).

5. Coffre de toit selon l'une des revendications 1 à 4, caractérisé en ce qu'aux côtés intérieurs longitudinaux de la partie inférieure (1), sont fixés des éléments de recouvrement (24) ouverts vers le haut et vers les petits côtés, ces éléments de recouvrement étant destinés à recevoir, dans la position de fermeture, les crochets (23) du couvercle ainsi que les galets (21).

FIG. 1

FIG. 2

5

FIG. 3

FIG. 4

FIG. 5

FIG. 6

FIG. 7

FIG. 8

FIG. 9

FIG. 10